# EUROPÄISCHE PATENTSCHRIFT

(11) **EP 1 392 102 B1**
(45) Veröffentlichungstag und Bekanntmachung des Hinweises auf die Patenterteilung: **16.01.2008**
(21) Anmeldenummer: 02745071.7
(22) Anmeldetag: 21.05.2002
(51) Int. Cl.: A01G 23/095

(54) **ENTASTUNGSVORRICHTUNG ZUM ENTFERNEN DER ÄSTE VON LEBENDEN BÄUMEN**
PRUNING DEVICE FOR REMOVING BRANCHES FROM LIVING TREES
DISPOSITIF D'EMONDAGE POUR ENLEVER LES BRANCHES D'ARBRES VIVANTS

(30) Priorität: 21.05.2001 DE 10124611
(43) Veröffentlichungstag der Anmeldung: 03.03.2004
(73) Patentinhaber: Jordan, Petra, 31535 Neustadt (DE)
(72) Erfinder: JORDAN, Ernst, 31535 Neustadt (DE)
(74) Vertreter: Patentanwälte Thömen & Körner
(86) Internationale Anmeldenummer: PCT/DE2002/001859
(87) Internationale Veröffentlichungsnummer: WO 2002/094007

(56) Entgegenhaltungen:
- CH-A- 231 532
- DE-A- 2 031 846
- DE-A- 2 146 371
- DE-A- 2 617 771
- DE-A- 3 702 760
- DE-C- 927 661
- DE-U- 9 320 410
- FR-A- 2 701 628
- FR-A- 2 780 606
- JP-A- 10 191 811

## Beschreibung

Die Erfindung betrifft eine Entastungsvorrichtung zum Entfernen der Äste von lebenden Bäumen nach dem Oberbegriff des Anspruchs 1.

Die Wertästung bzw. Ästung von Bäumen, insbesondere von Nadelbäumen, ist sowohl für die Forstwirtschaft als auch für die Holz- und Möbelindustrie von gravierender Bedeutung. Für die Holzverarbeitung werden nämlich astreine Baumstämme angestrebt und benötigt, und es ist daher üblich, die Stämme der noch lebenden Bäume zumindest in ihrem unteren Bereich von Ästen und Zweigen zu befreien. Durch die Ästung wird ein erheblicher Wertgewinn erzielt, weil die Erzeugung von astfreiem Schnittholz möglich ist.

Nachdem eine Wertästung erfolgt ist, wachsen die Bäume, insbesondere Kiefern und Fichten, noch über viele Jahre lang weiter und verbreitern dabei ihren Durchmesser, jedoch ohne die zuvor entfernten Äste, so dass nach dem Fällen dieser Bäume das gewünschte astfreie Holzmaterial für die Herstellung von Möbeln zur Verfügung steht. Im Zustand der Wertästung liegt der mittlere Durchmesser der Bäume in Größenordnungen von etwa 30 cm, während der Durchmesser im Endzustand beim Abholzen über 1 m betragen kann. Die Wertästung erfolgt üblicherweise im unteren Bereich der Baumstämme bis zu einer Höhe von etwa 10 m über dem Erdboden.

Grundsätzlich lässt sich die Ästung natürlich manuell mit einer Säge durchführen, mit welcher die Zweige und Äste direkt am Stamm entfernt werden. Allerdings ist eine solche manuelle Ästung sehr aufwendig und kostenintensiv. Da die Ästung bis zu einer Höhe von etwa 20 m erfolgen soll, sind außerdem weitere Hilfsmittel wie Leitern oder dergleichen erforderlich, mit denen aber günstigstenfalls nur etwa 10 m erreicht werden.

Man ist deshalb schon dazu übergegangen, eine maschinelle Ästung durchzuführen, und in der Zeitschrift "Forstarchiv", 44. Jahrgang, Heft Nr. 11, November 1973, Seiten 237-240, ist hierzu eine Klettersäge beschrieben, mit welcher die Äste eines Baumstammes automatisch entfernt werden können. Die bekannte Klettersäge umfasst ein den Baumstamm umgreifendes Gestell mit Antriebsrädern, die unter Druck am Baumstamm anliegen. Die Antriebsräder werden von einem eigenen Motor angetrieben, wodurch die Klettersäge am Baumstamm bis zu einer gewünschten einstellbaren Höhe schraubenlinienförmig hochklettern kann. Auf dem Gestell ist wenigstens eine handelsübliche Motorkettensäge mit einer auf einem Sägeschwert umlaufenden Sägekette angeordnet.

Aus der DE 4423594 A1 ist eine Entastungsvorrichtung zum Entfernen der Äste von lebenden Bäumen bekannt. Als wesentliche Bestandteile umfasst der Aufbau der Entastungsvorrichtung einen kreisbogenförmig verlaufenden und an seinen Enden offenen Drehkranzträger, auf dem sich ein ebenfalls kreisbogenförmig verlaufender und an seinen Enden offener Drehkranz befindet, der relativ zum ortsfesten Drehkranzträger beweglich ist. Der Drehkranz ist in der Weise beweglich, dass er eine geschlossene Kreisbahn beschreibt und umläuft, dass er sich also um den Umfang des Baumstammes herum bewegen kann. Auf dem Drehkranz befindet sich eine an sich bekannte und selbsttätig angetriebene Astsäge. Während der Drehkranz sich somit bewegt und eine geschlossene Kreisbahn beschreibt, können alle Äste auf dem Umfang des Baumstammes abgesägt werden.

Beim Einsatz der in der Zeitschrift "Forstarchiv" beschriebenen Klettersäge und der Entastungsvorrichtung gemäß DE 4423594 A1 verläuft das Sägeschwert der verwendeten Motorkettensäge parallel und senkrecht zum Baumstamm, wobei der Abstand zum Baumstamm etwa 1 - 2 cm beträgt.

Die Kettensäge umrundet dabei den Baumstamm auf einem Kreisbogen, wodurch die der Säge im Weg stehenden Äste nicht waagerecht, sondern dem Kreisbogen entsprechend rund abgesägt werden.

Sägeketten üblicher Kettensägen sind zur Holzbearbeitung als Laschenketten ausgebildet, wobei die als Schneidezähne bezeichneten Messer Kettenlaschen bilden. Durch die in Kettenumlaufrichtung unmittelbar aufeinanderfolgenden Messer mit ihrem seitlich auskragenden, über die Kettenlaschen vorstehenden Messerteil werden die Seitenwände der Schnittfuge bearbeitet.

Nachteilig an derart ausgebildeten Kettensägen ist, dass der genannte seitlich auskragende Messerteil die Seitenwände der Schnittfuge und somit die Schnittfläche aufrauht.

Diese Aufrauhung wird noch dadurch verstärkt, dass die Kettensäge bei der Entastung keinen geradlinigen Schnitt, sondern einen runden Schnitt ausführt.

Solche rauhen Schnittflächen der abgesägten Äste sind jedoch unerwünscht, weil die Gefahr von holzzersetzenden Pilzbefall besteht. Ein solcher Pilzbefall kann dazu führen, dass die Holzqualität im starken Maße beeinträchtigt wird.

Nachteilig an den herkömmlichen Kettensägen ist auch, dass das relativ lange und senkrecht am Baumstamm geführte Sägeschwert zu Beschädigungen an der Rinde führen kann. Dies ist darauf zurückzuführen, dass der Baum nicht genau senkrecht verläuft. Bei geringfügigen Abweichungen bewegt sich das obere Ende des Sägeschwertes so nahe am Baumstamm, dass es diesen berührt und in die Rinde einschneidet. Bei einer solchen Verletzung besteht wiederum die Gefahr eines holzzersetzenden und holzschädigenden Pilzbefalls.

Außerdem besteht die Gefahr, dass der für den Baum lebenswichtige Saftfluss, der in der Rinde in senkrechter Richtung entlang des Baumstammes erfolgt, unterbrochen wird. Dieser Saftfluss setzt in erheblichem Masse im Frühjahr ein und dauert bis zum späten Herbst.

Aus der DE 927 661 ist eine Entastungsvorrichtung bekannt, die eine Astsäge nach Art einer Urissäge umfaβt, wobei die Ureissäge an ihrem Umfang mit geschränkten Zähnen versehen ist.

Aus der Praxis ist bekannt, dass sich Kreissägen normalerweise nicht eignen, um einen runden Schnitt durchzuführen. Sobald das Sägeblatt im Kreisbogen um den Baumstamm geführt wird, tritt bei den herkömmlichen Kreissägen mit geschränkten Zähnen sehr schnell ein Klemmen während des Sägevorgangs auf. Das Klemmen des Sägeblattes ist insbesondere auf die Schränkung der Sägezähne zurückzuführen. Unter Schränken versteht man das wechselseitige Auseinanderbiegen der Zähne. Dadurch wird der Sägeschnitt breiter als das Sägeblatt, womit eigentlich ein Klemmen verhindert werden soll. Eine mit geschränkten Sägezähnen ausgebildete Kreissäge führt darüber hinaus zu einer sehr rauhen Schnittfläche, die bei der Entastung von Bäumen die Gefahr eines holzzersetzenden Pilzbefalls birgt.

Ausgehend von diesem Stand der Technik liegt der Erfindung die Aufgabe zugrunde, eine Entastungsvorrichtung der eingangs genannten Art anzugeben, die bei einfachem Aufbau und einfacher Handhabbarkeit eine wirkungsvolle und wirtschaftliche Wertästung von Bäumen ermöglicht.

Diese Aufgabe wird bei einer Entastungsvorrichtung nach dem Oberbegriff des Anspruchs 1 durch die kennzeichnenden Merkmale des Anspruchs 1 gelöst. Weiterbildungen und vorteilhafte Ausgestaltungen der Erfindung ergeben sich aus den Unteransprüchen.

Die erfindungsgemäße Entastungsvorrichtung zum Entfernen der Äste von lebenden Bäumen zeichnet sich dadurch aus, dass die verwendete Astsäge nach Art einer Kreissäge ausgebildet ist, auf deren Umfang ausschließlich nicht geschränkte Sägezähne angeordnet sind.

Überraschenderweise wurde nun gefunden, dass bei einem nicht geschränkten Sägenblatt, welches im Kreisbogen geführt wird, eine sehr glatte Schnittfläche erhalten wird, ohne dass ein Klemmen auftritt.

Die nicht geschränkten Sägezähne bilden erfindungsgemäß nahezu eine Ebene mit dem Sägeblatt. Eine derartige Ausbildung des Kreissägenblattes eignet sich besonders gut für einen runden Schnitt mit glatter Oberfläche. Ein Kreissägenblatt mit aus der Ebene auskragenden Sägezähnen, die bei einem geradlinigen Schnitt ein Klemmen üblicherweise verhindern, ist in diesem Fall unbrauchbar.

Als besonders vorteilhaft hat sich herausgestellt, dass die erfindungsgemäße Astsäge gegenüber den sonst verwendeten Motorkettensägen mit viel höheren Drehgeschwindigkeiten arbeiten kann. Dadurch werden wesentlich glattere Schnittflächen erzielt.

Ein weiterer Vorteil besteht darin, dass die Rinde von nicht genau senkrecht wachsenden Bäumen unversehrt bleibt, weil die verwendete Astsäge nach Art einer Kreissäge in ihren Ausmaßen viel kürzer ist als die relativ langen Sägeschwerter der sonst verwendeten Kettensägen.

Vorzugsweise sind die einzelnen Sägezähne des Sägenblattes einseitig schräg zum Baumstamm geneigt.

Es hat sich herausgestellt, dass das Sägenblatt durch die einseitig schräge Ausrichtung der Zähne dazu neigt, in gewünschter Weise dem Kreisbogen beim Absägen der Äste zu folgen.

Bevorzugt sind die Schneidkanten der Sägezähne mit Vidiastahl bestückt, wodurch ein sehr einfaches Absägen der Äste möglich ist.

Die Erfindung sieht zudem vor, dass die Entastungsvorrichtung als Antrieb mindestens eine Hydraulikleitung umfasst, und dass sich die Sägeeinheit im Abstand entlang des Kreisumfangs des Baumstammes oszillierend bewegt, während sich das Gestell der Entastungsvorrichtung geradlinig entlang des Baumstammes bewegt.

Beim Vortrieb der Entastungsvorrichtung pendelt die Sägeeinheit somit permanent horizontal von links nach rechts um die Achse des Baumstammes. Dadurch wird gewährleistet, dass der Baumstamm über den gesamten Kreisumfang entastet wird. Eine oszillierende Sägeeinheit ist erforderlich, da eine Entastungsvorrichtung mit Hydraulikantrieb wegen ihrer hydraulischen Verbindung zu einem am Boden befindlichen Hydraulikmotor nur geradlinig entlang des Baumstammes verfahren werden kann. Wenn die Sägeeinheit zusammen mit Entastungsvorrichtung schraubenlinienförmig den Baumstamm hochklettert, würde sich die Hydraulikleitung ab einer gewissen Höhe am Baumstamm verhaken.

Das Gestell der erfindungsgemäßen Entastungsvorrichtung klettert somit den Baumstamm geradlinig hoch, wobei nur die Sägeeinheit horizontal oszilliert und dabei sämtliche im Weg stehenden Äste über den vollen Umfang des Baumstammes absägt.

Der Grad einer Schwingung der Oszillation in eine Richtung ist dabei erfindungsgemäß von der Anzahl und der Anordnung der verwendeten Kreissägen abhängig. Jedenfalls ist eine Schwingung in eine Richtung wenigstens so groß, dass der gesamte Umfang des Baumstammes entastet werden kann.

Bei einer Sägeeinheit, die gemäß einer Weiterbildung drei Kreissägen umfasst, welche im nahezu gleichen Abstand zu einander um den Kreisumfang des Baumes angeordnet sind, beträgt der Grad einer Schwingung um die Achse des Baumstammes etwa 120°.

Als Weiterbildung ist vorgesehen, dass jedes Sägeblatt einer Astsäge derart tangential zum Kreisumfang des Baumstammes steht, dass die Äste in tangentialer Richtung abgeschnitten werden. Dadurch lassen sich die Äste besonders einfach und nahe am Baumstamm absägen.

Bei einer derartigen Ausrichtung des Sägeblattes befindet sich eine Hälfte des Sägeblattes näher am Baumstamm als die andere Hälfte. Bei einer oszillierenden Sägeeinheit werden die Äste daher immer nur von der näher am Baumstamm befindlichen Sägeblatthälfte in gewünschter Weise entfernt. Das Entasten erfolgt dabei in zufriedenstellender Weise immer dann, wenn die Sägeeinheit in Richtung der zum Baumstamm weisenden Sägeblatthälfte schwingt. Dementsprechend wird die Entastungsvorrichtung auch nur dann weiter entlang des Baumstammes verfahren, wenn die Sägeeinheit in ihre Ausgangsposition zurückgekehrt ist.

Bei einer oszillierenden Sägeeinheit ist es daher zweckmäßig, die Halterung jeder Astsäge so auszubilden, dass die Astsäge beim Wechsel der Sägeeinheit von der Vorwärts- in die Rückwärtsbewegung ebenfalls in ihrer Position verändert werden kann, und zwar derart, dass sich die zuvor vom Baumstamm entfernte Sägeblatthälfte nunmehr nahe am Baumstamm befindet. Beim Wechsel von der Rückwärts- in die Vorwärtsbewegung kehrt die Astsäge dann in ihre ursprüngliche Position zurück und so weiter.

Durch diese Maßnahme wird erreicht, dass die Entastungsvorrichtung bei gleicher Leistung schneller am Baumstamm hochklettern kann. Dies bedeutet in wirtschaftlicher Hinsicht eine Zeitersparnis um die Hälfte.

Eine vorteilhafte Ausgestaltung der Erfindung sieht vor, dass jede Kreissäge einen eigenen Öldruckmotor umfasst, der das Sägeblatt mit bis zu 4000 Umdrehungen pro Minute antreibt.

Ein derart hohe Drehzahl führt beim Absägen eines Astes zu einer besonders glatten Schnittfläche, wodurch die Gefahr eines holzzersetzenden Pilzbefalls wesentlich verringert wird. Die Verwendung von Hydraulikmotoren ermöglicht einen verschleißarmen Betrieb der Kreissäge.

Eine Weiterbildung sieht vor, dass die Sägezahnteilung derart klein ist, dass beim Sägen eine glatte Schnittfläche entsteht. Die Sägezahnteilung muss aber wenigstens so groß sein, dass die beim Sägen anfallende Holzspanmenge von den Zahnlücken des Kreissägeblattes aufgenommen und abtransportiert werden kann.

Bei Beachtung dieser Weiterbildung können beim Sägen sehr glatte Schnittflächen entstehen, die die Gefahr eines holzzersetzenden Pilzbefalls herabsetzen.

Eine vorteilhafte Ausgestaltung der Erfindung sieht vor, dass das Kreissägeblatt wenigstens eine zum Baumstamm weisende Abstandsscheibe umfasst.

Dadurch wird erreicht, dass bei Schwankungen im Baumstammumfang die Sägezähne vom Baumstamm, insbesondere von der Rinde abgehalten werden und diese nicht verletzen. Eine Unterbrechung des für das Wachstum des Baumes notwendigen Saftflusses in der Rinde wird verhindert.

Außerdem ist vorgesehen, dass der Schnittbereich der Kreissäge maximal 10 cm beträgt.

Dadurch wird ebenfalls die Gefahr einer Verletzung der Rinde verringert. Bei herkömmlich verwendeten Kettensägen war eine Verletzung der Rinde durch die relative langen Sägeschwerter immer dann zu befürchten, wenn die Baumstämme nicht genau senkrecht verliefen. Dabei verletzte die Spitze der Sägeschwerter sehr leicht die Rinde eines zur Kettensäge geneigten Baumstammes.

Eine Weiterbildung sieht vor, dass die Antriebs- und/oder Andruckmitteln der Entastungsvorrichtung Antriebsketten, insbesondere breite Riemen mit glatter Oberfläche sind.

Über derartige Antriebsketten wird der Druck auf die Rinde auf eine relativ große Fläche verteilt. Dadurch wird erreicht, dass nur ein minimaler Rindendruck auftritt und die Rinde geschont wird. Die Gefahr eine Unterbrechung des bereits erwähnten lebensnotwendigen Saftflusses im Baumstamm wird verringert.

Vorzugsweise bestehen die Antriebsketten aus einem Kunststoff.

Kunststoff eignet sich besonders gut für eine schonende Übertragung der auftretenden Antriebs- und Andruckkräfte auf den Baumstamm. Insbesondere ist der Vortrieb der Entastungsvorrichtung auch bei nasser Baumrinde gewährleistet und ermöglicht eine hohe Arbeitsgeschwindigkeit.

In einer vorteilhaften Ausgestaltung der Erfindung ist die Entastungsvorrichtung lösbarer Teil eines Trägerfahrzeuges, von dem aus die Entastungsvorrichtung steuerbar ist.

Nachfolgend wir die Erfindung anhand eine Ausführungsbeispiels erläutert, das in der Zeichnung dargestellt ist. In dieser zeigen:
- Fig. 1: eine schematische Draufsicht einer Sägeeinheit mit drei Astsägen,
- Fig. 2: eine schematische Darstellung einer erfindungsgemäß verwendeten Astsäge nach Art einer Kreissäge in Draufsicht,
- Fig. 3: einen schematischen Ausschnitt aus einem erfindungsgemäß verwendeten Sägenblatt in Seitenansicht,
- Fig. 4: detailliertere Ansichten eines Sägezahnes des erfindungsgemäß verwendeten Sägenblattes und
- Fig. 5: eine schematische Darstellung eines Gestells..

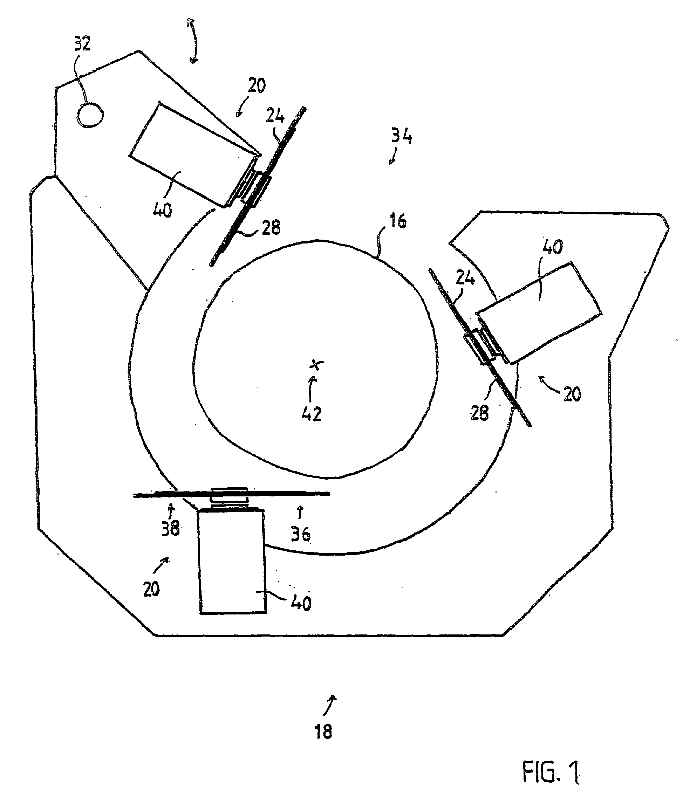

In Fig. 1 ist schematisch eine Sägeeinheit 18 mit drei Astsägen dargestellt, die jeweils nach Art einer Kreissäge 20 ausgebildet sind.

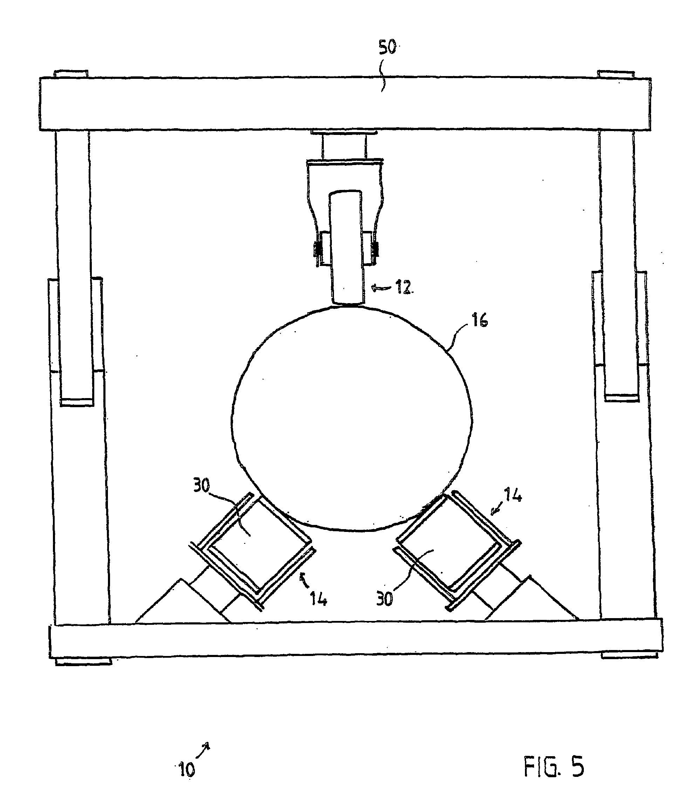

Die Sägeeinheit 18 ist Teil der erfindungsgemäßen Entastungsvorrichtung und auf einem in Fig. 5 dargestellten Gestell 10 beweglich angeordnet. Die Entastungsvorrichtung ist wiederum lösbarer Teil eines hier nicht dargestellten Trägerfahrzeugs und über wenigstens eine hier nicht dargestellte Hydraulikleitung mit diesem verbunden. Das Gewicht aus Trägerfahrzeug, Hydraulikleitung und Entastungsvorrichtung beträgt nur etwa 300 kg, wodurch das Gerät bereits von einer Person bedient werden kann. Das Trägerfahrzeug umfasst ein 4-Takt-Antriebsaggregat, welches für den notwendigen Öldruck des eigenen und des Antriebs der Entastungsvorrichtung sorgt.

Zur Entastung wird die in Fig. 1 dargestellte Sägeeinheit 18 um den Baumstamm 16 gelegt. Dazu kann es bei etwas größeren Baumstämmen 16 notwendig sein, eine der äußeren Kreissägen 20 über ein Gelenk 32 nach außen zu klappen, um so die Öffnung 34 der Sägeeinheit 18 zur Aufnahme des Baumstammes 16 zu vergrößern. Ist der Baumstamm 16 positioniert, kann die äußere Kreissäge 20 wieder in ihre ursprüngliche Position gebracht werden, was selbstverständlich manuell oder automatisch geschehen kann.

Erfindungsgemäß oszilliert die dargestellte Sägeeinheit 18 horizontal im Abstand entlang des Kreisumfangs des Baumstammes 16, während sich das in Fig. 5 dargestellte Gestell 10 der Entastungsvorrichtung geradlinig entlang des Baumstammes 16 nach oben bewegt.

Das permanente horizontale Pendeln der Sägeeinheit 18 um die Achse 42 des Baumstammes 16 ist insbesondere dann sinnvoll, wenn die Entastungsvorrichtung über eine Hydraulikleitung angetrieben wird. Bei einer über eine Hydraulikleitung angetriebenen Entastungsvorrichtung ist es nämlich nicht möglich, die Entastungsvorrichtung schraubenlinienförmig nach oben zu verfahren, da sich die Hydraulikleitung sonst am Baumstamm 16 verwickeln würde. Durch die Vorwärts- und Rückwärtsbewegungen der oszillierenden Sägeeinheit 18 wird trotzdem sichergestellt, dass der Baumstamm 16 vollständig entastet wird. Vorzugweise beträgt der Grad einer Schwingung in eine Richtung etwa 120°.

Weiterhin ist dargestellt, dass jedes Sägeblatt 24 tangential zum Kreisumfang des Baumstammes 16 steht. Bei einer derartigen Ausrichtung des Sägeblattes 24 befindet sich eine Hälfte 36 des Sägeblattes 24 näher am Baumstamm 16 als die andere Hälfte 38. Bei einem oszillierenden Sägeblatt 24 werden die Äste daher immer nur von der näher am Baumstamm 16 befindlichen Sägeblatthälfte 36 in gewünschter Weise entfernt.

Das Entasten erfolgt dabei in zufriedenstellender Weise immer dann, wenn die Sägeeinheit 18 in Richtung der zum Baumstamm 16 weisenden Sägeblatthälfte 36 schwingt. Dementsprechend wird die Entastungsvorrichtung auch nur dann weiter entlang des Baumstammes 16 verfahren, wenn die Sägeeinheit 18 in ihre Ausgangsposition zurückgekehrt ist.

Bei einer oszillierenden Sägeeinheit 18 ist es daher zweckmäßig, die Halterung 40 der Astsäge 20 so auszubilden, dass die Sägeblatthälften 36, 38 der Astsäge 20 abwechselnd nahe am Baumstamm geführt werden.

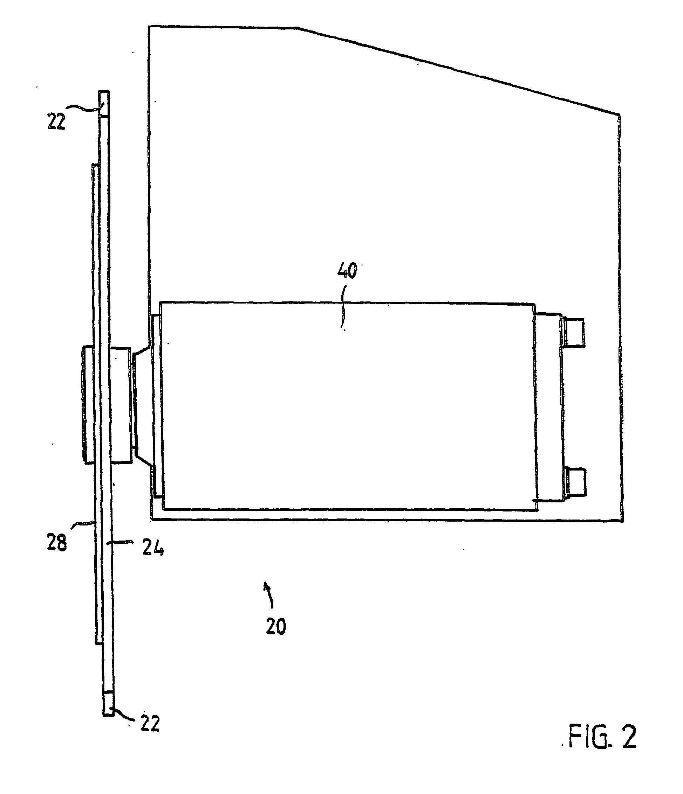

In Fig. 2 ist schematisch eine erfindungsgemäß verwendete Astsäge nach Art einer Kreissäge 20 in Draufsicht dargestellt.

Die Astsäge 20 umfasst eine Halterung 40, ein mit bis zu 4000 Umdrehungen pro Minute angetriebenes Sägeblatt 24 mit Sägezähnen 22 sowie eine am Sägeblatt 24 angeordnete und zum Baumstamm 16 weisende Abstandsscheibe 28.

Die erfindungsgemäße Entastungsvorrichtung zeichnet sich neben der Verwendung einer Astsäge nach Art einer Kreissäge 20 anstelle einer Motorkettensäge dadurch aus, dass die Sägezähne 22 der Astsäge 20 ungeschränkt ausgebildet sind. Unter Schränken versteht man das wechselseitige Auseinanderbiegen der Sägezähne 22. Dadurch wird der Sägeschnitt breiter als das Sägeblatt 24. Zwar sind in Fig. 2 nicht die einzelnen Sägezähne 22 dargestellt, es ist aber deutlich zu erkennen, dass die Sägezähne 22 nicht über das Sägeblatt 24 auskragen, sondern nahezu eine Ebene mit dem Sägeblatt 24 bilden.

Durch die zusätzlich angeordnete Abstandsscheibe 28 wird erreicht, dass bei Schwankungen im Umfang des Baumstammes 16 die Sägezähne 22 vom Baumstamm 16, insbesondere von der Rinde abgehalten werden und diese nicht verletzen.

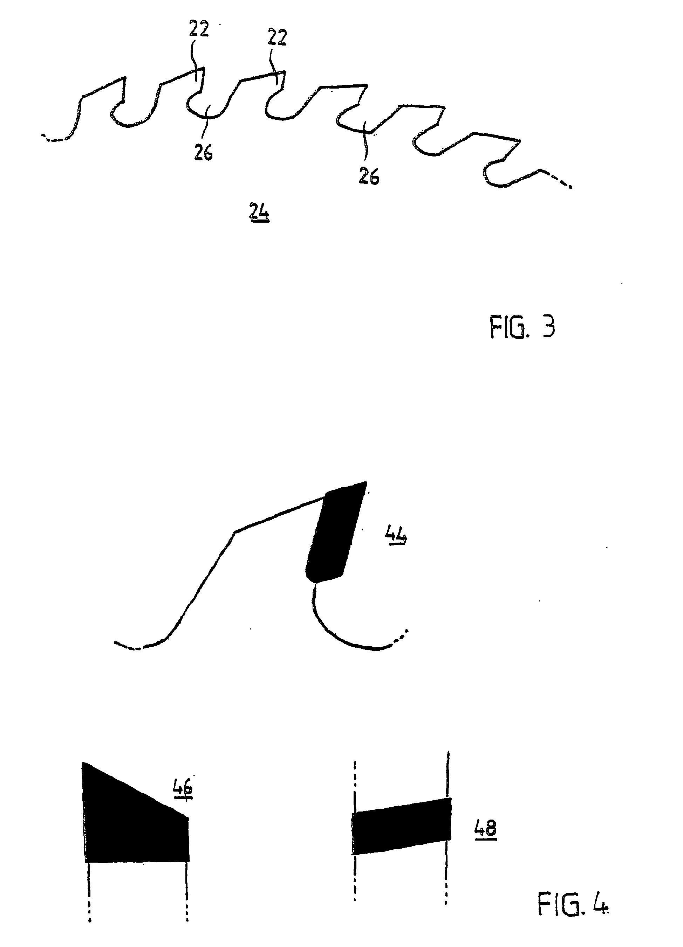

Fig. 3 zeigt einen Ausschnitt aus einem erfindungsgemäß verwendeten Sägeblatt 24 in Seitenansicht.

Die hier dargestellten Sägezähne 22 sind nicht geschränkt. Die Sägezahnteilung ist so klein gewählt, dass beim Sägen eine glatte Schnittfläche entsteht. Die Zahnlücken 26 sind aber so groß, dass die beim Sägen anfallende Holzspanmenge von den Zahnlücken 26 aufgenommen und wegtransportiert werden können.

In Fig. 4 sind drei detaillierte Ansichten eines Sägezahnes aus einem erfindungsgemäß verwendeten Sägenblatt 24 der Astsäge dargestellt.

Zu sehen ist eine Seitenansicht 44, eine Ansicht auf die Zahnbrust 46 und eine Ansicht auf den Zahnrücken 48.

Die Ansicht auf die Zahnbrust 46 zeigt, wie jeder Sägezahn 22 einseitig schräg zum Baumstamm 16 geneigt ist. In dieser Darstellung würde sich der Baumstamm 16 auf der rechten Seite der Zahnbrust 46 befinden.

Schließlich ist in Fig. 5 ein Gestell 10 als Teil der erfindungsgemäßen Entastungsvorrichtung schematisch dargestellt.

Das Gestell 10 umfasst Antriebs- und Andruckmittel 12, 14 und sorgt dafür, dass die in Fig. 1 dargestellte Sägeeinheit 18 am Baumstamm 16 in die Höhe bewegt wird.

In diesem Fall sind die Andruckmittel 14 der Entastungsvorrichtung als Antriebsketten 30 in Form von breiten Riemen mit glatter Oberfläche ausgebildet.

Über derartige Antriebsketten 30 wird der Druck auf die Rinde auf eine relativ große Fläche verteilt und die Rinde geschont.

Am Einsatzort umgreift das Gestell 10 zusammen mit der in Fig. 1 dargestellten Sägeeinheit 18 den Baumstamm 16. Dazu wird das Gestell 10 an einer Seite 50 geöffnet und wieder geschlossen. Anschließend werden die Antriebsketten 30 angesteuert und das Gestell löst sich zusammen mit der in Fig. 1 dargestellten Sägeeinheit 18 von einem hier nicht dargestellten Trägerfahrzeug.

Die Entastungsvorrichtung wird vom Trägerfahrzeug aus von einer Person bedient, wobei die Entastungsvorrichtung über eine sich selbst auf- und abrollende Hydraulikleitung mit dem Trägerfahrzeug verbunden ist.

Der Vortrieb der auch bei nasser Baumrinde sicher haftenden Antriebsketten 30 ist stufenlos vom Trägerfahrzeug aus regelbar und ermöglicht verschiedene Arbeitsgeschwindigkeiten. Dies stellt die einwandfreie Arbeit der Sägeeinheit 18 hinsichtlich der zu sägenden Aststärke sicher. Nach dem Entasten des Baumstammes 16 wird die Entastungsvorrichtung herabgefahren und wieder an das Trägerfahrzeug gekoppelt.

Die Praxis hat ergeben, dass sich Baumstämme 16 mit einem Durchmesser von 12 bis 35 cm bis zu einer Entastungshöhe von 20 m entasten lassen. Dabei kann die Aststärke bis zu 7 cm betragen. Durch die erfindungsgemäße spezielle Sägetechnik wird eine außerordentlich saubere Schnittfläche erzeugt.

Durch die erfindungsgemäße Entastungsvorrichtung ist es au-βerdem möglich, 25 bis 30 Bäume pro Stunde bei einer Entastungshöhe von 10 m zu entasten. Eine derartig schnelle Entastung führt zu enormen wirtschaftlichen Einsparungen. Insbesondere ist zur Bedienung der erfindungsgemäßen Entastungsvorrichtung nur eine Person notwendig, was auf das niedrige Gewicht der Entastungsvorrichtung sowie die verschleißfreie und einfache Handhabung zurückzuführen ist.

## Patentansprüche

1. Entastungsvorrichtung zum Entfernen der Äste von lebenden Bäumen, mit einem Gestell (10), welches Antriebs- sowie Andruckmittel (12, 14) umfasst, um die Entastungsvorrichtung entlang eines Baumstammes (16) zu bewegen, sowie mit einer Sägeeinheit (18), die wenigstens eine Astsäge umfasst und die fest oder beweglich auf dem Gestell (10) angeordnet ist, wobei die Astsäge nach Art einer Kreissäge (20) ausgebildet ist, **dadurch gekennzeichnet, dass** auf dem Umfang der Urissäge ausschießlich nicht geschränkte Sägezähne (22) angeordnet sind, dass die Entastungsvorrichtung als Antrieb mindestens eine Hydraulikleitung umfasst, und dass sich die Sägeeinheit (18) im Abstand und entlang des Kreisumfanges des Baumstammes (16) oszillierend bewegt, während sich das Gestell (10) der Entastungsvorrichtung geradlinig entlang des Baumstammes (16) bewegt.

2. Entastungsvorrichtung nach Anspruch 1, **dadurch gekennzeichnet, dass** die Sägezähne (22) einseitig schräg zum Baumstamm (16) geneigt sind.

3. Antastungsvorrichtung nach Anspruch 1 oder 2, **dadurch gekennzeichnet, dass** die Schneidkanten der Sägezähne mit Vidiastahl bestückt sind.

4. Entastungsvorrichtung nach Anspruch 1, **dadurch gekennzeichnet, dass** der Grad einer Schwingung der Oszillation in eine Richtung von der Anzahl und der Anordnung der verwendeten Kreissägen (20) abhängig ist und wenigstens so groß ist, dass der gesamte Kreisumfang des Baumstammes (16) entastbar ist.

5. Entastungsvorrichtung nach Anspruch 4, **dadurch gekennzeichnet, dass** die Sägeeinheit (18) drei Kreissägen (20) umfasst und der Grad einer Schwingung entlang des Kreisumfanges des Baumstammes (16) etwa 120° beträgt.

6. Entastungsvorrichtung nach einem der Ansprüche 1 bis 5, **dadurch gekennzeichnet, dass** das Sägeblatt (24) der Astsäge derart tangential zum Kreisumfang des Baumstammes (16) steht, dass die Äste in tangentialer Richtung abgeschnitten werden.

7. Entastungsvorrichtung nach einem der Ansprüche 1 bis 6, **dadurch gekennzeichnet, dass** jede Kreissäge (20) einen eigenen Öldruckmotor umfasst, der das Sägeblatt (24) mit bis zu 4000 Umdrehungen pro Minute antreibt.

8. Entastungsvorrichtung nach einem der Ansprüche 1 bis 7, **dadurch gekennzeichnet, dass** die Sägezahnteilung so klein ist, dass beim Sägen eine glatte Schnittfläche entsteht, aber so groß ist, dass die beim Sägen anfallende Holzspanmenge von den Zahnlücken (26) aufnehmbar und abtransportierbar ist.

9. Entastungsvorrichtung nach einem der Ansprüche 1 bis 8, **dadurch gekennzeichnet, dass** das Sägeblatt (24) wenigstens eine zum Baumstamm (16) weisende Abstandsscheibe (28) umfasst.

10. Entastungsvorrichtung nach einem der Ansprüche 1 bis 9, **dadurch gekennzeichnet, dass** der Schnittbereich der Kreissäge (20) maximal 10 cm beträgt.

11. Entastungsvorrichtung nach Anspruch 1 bis 10, **dadurch gekennzeichnet, dass** die Antriebs- und/oder Andruckmitteln Antriebsketten (30), insbesondere breite Riemen mit glatter Oberfläche sind.

12. Entastungsvorrichtung nach Anspruch 11, **dadurch gekennzeichnet, dass** die Antriebsketten (30) aus einem Kunststoff bestehen.

13. Entastungsvorrichtung nach einem der Ansprüche 1 bis 12, **dadurch gekennzeichnet, dass** die Entastungsvorrichtung lösbarer Teil eines Trägerfahrzeuges ist, von dem aus die Entastungsvorrichtung steuerbar ist.

## Claims

1. Pruning device for removing branches from living trees, with a frame (10) which comprises drive and pressure means (12, 14) for moving the pruning device along a tree trunk (16), and with a sawing unit (18) which comprises at least one branch saw and which is arranged on the frame (10) in a fixed or movable manner, wherein the branch saw is designed in the manner of a circular saw (20), **characterised in that** exclusively straight-set saw teeth (22) are arranged on the circumference of the circular saw, **in that** the pruning device comprises at least one hydraulic line as the drive, and **in that** the sawing unit (18) moves in an oscillating manner at a distance from and along the circular circumference of the tree trunk (16), while the frame (10) of the pruning device moves in a rectilinear manner along the tree trunk (16).

2. Pruning device according to claim 1, **characterised in that** the saw teeth (22) are inclined at an angle to the tree trunk (16) on one side.

3. Pruning device according to claim 1 or 2, **characterised in that** the cutting edges of the saw teeth are equipped with Vidia steel.

4. Pruning device according to claim 1, **characterised in that** the degree of one swing of the oscillation in one direction is dependent on the number and the arrangement of the circular saws (20) that are used and is at least large enough that the entire circular circumference of the tree trunk (16) can be pruned.

5. Pruning device according to claim 4, **characterised in that** the sawing unit (18) comprises three circular saws (20) and the degree of one swing along the circular circumference of the tree trunk (16) is approximately 120°.

6. Pruning device according to one of claims 1 to 5, **characterised in that** the saw blade (24) of the branch saw is tangential to the circular circumference of the tree trunk (16) such that the branches are cut off in the tangential direction.

7. Pruning device according to one of claims 1 to 6, **characterised in that** each circular saw (20) comprises its own hydraulic motor which drives the saw blade (24) at up to 4000 revolutions per minute.

8. Pruning device according to one of claims 1 to 7, **characterised in that** the saw tooth pitch is small enough that a smooth cut surface is obtained during sawing but is large enough that the wood chips produced during sawing can be received by the tooth gaps (26) and transported away.

9. Pruning device according to one of claims 1 to 8, **characterised in that** the saw blade (24) comprises at least one spacer washer (28) pointing towards the tree trunk (16).

10. Pruning device according to one of claims 1 to 9, **characterised in that** the cutting area of the circular saw (20) is at most 10 cm.

11. Pruning device according to claim 1 to 10, **characterised in that** the drive and/or pressure means are drive chains (30), in particular wide belts with a smooth surface.

12. Pruning device according to claim 11, **characterised in that** the drive chains (30) are made of plastic.

13. Pruning device according to one of claims 1 to 12, **characterised in that** the pruning device is a detachable part of a carrier vehicle from which the pruning device can be controlled.

## Revendications

1. Dispositif d'élagage, destiné à enlever les branches d'arbres vivants et comprenant une carcasse (10) avec des moyens d'entraînement et de serrage (12, 14) permettant de déplacer le dispositif d'élagage le long d'un tronc d'arbre (16), ainsi qu'une unité de sciage (18) avec une scie à élaguer au moins, unité de sciage, qui est disposée de manière fixe ou mobile sur la carcasse (10), la scie à élaguer étant conçue comme une scie circulaire (20), **caractérisé en ce que** sur la circonférence de la scie circulaire sont disposées exclusivement des dents de scie (22) non avoyées, **en ce que** le dispositif d'élagage comprend au moins une conduite hydraulique comme entraînement, et **en ce que** l'unité de sciage (18) se déplace de manière oscillante le long et à distance de la circonférence du tronc d'arbre (16), alors que la carcasse (10) du dispositif d'élagage se déplace de manière linéaire le long du tronc d'arbre (16).

2. Dispositif d'élagage suivant la revendication 1, **caractérisé en ce que**, sur un côté, les dents de scie (22) présentent une inclinaison par rapport au tronc d'arbre (16).

3. Dispositif d'élagage suivant la revendication 1 ou 2, **caractérisé en ce que** les arêtes des dents de scie sont garnies d'acier Vidia.

4. Dispositif d'élagage suivant la revendication 1, **caractérisé en ce que** le degré d'un mouvement de l'oscillation dans une direction est fonction du nombre et de la disposition des scies circulaires (20) utilisées et **en ce que** ce degré est au moins aussi élevé qu'il soit possible d'élaguer l'ensemble de la circonférence du tronc d'arbre (16).

5. Dispositif d'élagage suivant la revendication 4, **caractérisé en ce que** l'unité de sciage (18) comprend trois scies circulaires (20) et que le degré d'un mouvement de l'oscillation le long de la circonférence du tronc d'arbre (16) s'élève à 120° environ.

6. Dispositif d'élagage suivant une des revendications 1 à 5, **caractérisé en ce que** la lame de scie (24) de la scie à élaguer est positionnée tangentiellement à la circonférence du tronc d'arbre (16) de manière que les branches soient coupées dans le sens tangentiel.

7. Dispositif d'élagage suivant une des revendications 1 à 6, **caractérisé en ce que** chaque scie circulaire (20) comprend un moteur hydraulique qui entraîne la lame de scie (24) avec une vitesse allant jusqu'à 4000 tours par minute.

8. Dispositif d'élagage suivant une des revendications 1 à 7, **caractérisé en ce que** le pas des dents de scie est aussi petit qu'une surface de coupe lisse soit produite lors du sciage, mais aussi grand que la quantité de copeaux de bois produite lors du sciage puisse être recueillie et évacuée par les entredents (26).

9. Dispositif d'élagage suivant une des revendications 1 à 8, **caractérisé en ce que** la lame de scie (24) comprend au moins un disque écarteur (28) tourné vers le tronc d'arbre (16).

10. Dispositif d'élagage suivant une des revendications 1 à 9, **caractérisé en ce que** la zone de coupe de la scie circulaire (20) est de 10 cm au maximum.

11. Dispositif d'élagage suivant les revendications 1 à 10, **caractérisé en ce que** les moyens d'entraînement et/ou de serrage sont des chaînes d'entraînement (30), en particulier des courroies larges à surface lisse.

12. Dispositif d'élagage suivant la revendication 11, **caractérisé en ce que** les chaînes d'entraînement (30) sont en matière artificielle.

13. Dispositif d'élagage suivant une des revendications 1 à 12, **caractérisé en ce que** le dispositif d'élagage constitue un élément amovible d'un véhicule support, depuis lequel il peut être commandé.
